# EUROPÄISCHE PATENTANMELDUNG

(11) **EP 2 224 238 A2**
(43) Veröffentlichungstag der Anmeldung: **01.09.2010**
(21) Anmeldenummer: 10000253.4
(22) Anmeldetag: 13.01.2010
(51) Int. Cl.: G01N 31/12

(54) **Vorrichtung und Verfahren zur Elementaranalyse**

(30) Priorität: 25.02.2009 DE 102009010269
(71) Anmelder: Elementar Analysensysteme GmbH, 63452 Hanau (DE)
(72) Erfinder: Kupka, Hans-Joachim, 63543 Neuberg (DE); Löser, Danny, 60385 Frankfurt/Main (DE); Kraus, Sabine, 63755 Alzenau (DE); Sieper, Hans-Peter, 63471 Geinhausen (DE)
(74) Vertreter: Grimm, Ekkehard

(57) **Zusammenfassung**

Die Erfindung betrifft eine Vorrichtung sowie ein Verfahren zur Elementaranalyse zum Analysieren der Elemente C und N, oder N, einer Probe, die ein Verbrennungsrohr (1), ein Nachverbrennungsrohr (7), eine Trocknungseinrichtung (9), eine Teilereinrichtung (13,14,15), durch die ein Teil der Gasmenge abgezweigt wird, und eine Analysevorrichtung (20) aufweist, die dadurch gekennzeichnet ist, dass die Teilereinrichtung (13,14,15) die Gasmenge kontinuierlich aus den Verbrennungsgasen abzweigt, kontinuierlich zu der Analysevorrichtung (20) mit einer über einen Mass-Flow-Controller (MFC) (21) geregelten Genauigkeit der Teilereinrichtung (13,14,15) von mindestens 1 % bei der N₂-Messung und einer Genauigkeit von mindestens 0,1 % bei der CO₂-Messung, jeweils relativ in Bezug auf die gemessene Element-Konzentration, führt und dass die der Teilereinrichtung (13,14,15) zugeführte Gasmenge durch eine vor der Teilereinrichtung angeordnete CO₂-Adsorptions Desorptions-Einrichtung (10) auf ein Quasi-Zweistoffgemisch reduziert wird.

## Beschreibung

Die Erfindung betrifft eine Vorrichtung zur Elementaranalyse zum Analysieren der Elemente C und N, oder N, einer Probe, die ein Verbrennungsrohr, das mit einer Helium-Versorgung und einer Sauerstoff-Versorgung verbunden ist, ein sich daran anschließendes Nachverbrennungsrohr, eine nachfolgende Trocknungseinrichtung, eine sich daran anschließende Teilereinrichtung, durch die ein Teil der Gasmenge abgezweigt wird, aufweist, und mit einer Analysevorrichtung, der diese abgezweigte Gasmenge über ein Reduktionsrohr zur Analyse von Verbrennungsgasen zugeführt wird.

Weiterhin betrifft die Erfindung ein entsprechendes Verfahren zur Elementaranalyse zum Analysieren der Elemente C und N, oder N, einer Probe.

Bei der Analyse der Elemente Kohlenstoff (C) und Stickstoff (N), oder nur Stickstoff, werden die Proben in einem Heliumgasstrom unter Zufuhr von Sauerstoff verbrannt. Durch geeignete Absorptionseinrichtungen muss sichergestellt werden, dass nur N₂ und CO₂ in die Detektionseinrichtung gelangen. Zum Beispiel wird der in der Probe enthaltene Wasserstoff zu H₂O verbrannt, welches in einer Trocknungseinrichtung absorbiert werden muss. Des Weiteren wird der bei der Verbrennung überschüssige Sauerstoff an Kupfer absorbiert, weil ansonsten der in die Detektionseinrichtung gelangende Sauerstoff die Stickstoffmessung erheblich verfälscht. Insbesondere bei Probenmengen > 30 mg nimmt die Restsauerstoffmenge deutlich zu (eine Optimierung ist wegen des unterschiedlichen Sauerstoffbedarfs verschiedener Proben schwierig), so dass insbesondere bei der Verbrennung großer Probenmengen die Lebensdauer der Kupferfüllung deutlich abnimmt. Der häufige Wechsel der Kupferfüllung ist ein Zeit- und Kostenfaktor. Hier bietet es sich an, nur eine Teilgasmenge über die Kupferfüllung zu führen und anschließend diese Teilgasmenge der Detektionseinrichtung zuzuführen, wodurch eine Verlängerung der Haltbarkeit der Kupferfüllung um den Faktor 5 und mehr erreicht werden kann.

Eine Vorrichtung der eingangs genannten Art ist aus der DE 33 01 971 A1 bekannt. Diese Druckschrift beschreibt einen Elementaranalysator, der für die Bestimmung des Kohlenstoff-, Wasserstoff- und Stickstoffgehaltes eines organischen Materials beschrieben wird. Dieser Elementaranalysator umfasst einen Analyseofen, einen Beschickungskopf für die Einführung von Proben in den Analyseofen, zwei Detektoren zur Analyse jeweils von zwei während der Probenverbrennung gebildeten Bestandteilsgasen und ein Sammelgefäß für die Sammlung und den Abgleich der Bestandteilsgase, die sich aus der Verbrennung ergeben. An das Sammelgefäß ist ein Stickstoffanalysator angeschlossen, um einen Bruchteil der abgeglichenen Gase zur Analyse des Stickstoffgehaltes der Probe abzuziehen. Das Sammel- und Abgleichsgefäß enthält einen Zylinder und einen darin verschiebbaren Kolben. In der oberen Stellung des Kolbens beträgt das Volumen des Gefäßes annähernd 5 Liter, so dass diese Menge an gemischtem Gas zur Verfügung steht; von diesem Volumen werden 10 ccm abgezogen und einer Kupferreduktionskammer sowie einer Detektionseinrichtung zugeführt.

Ein Verbrennungssystem mit einer Analyseeinrichtung, das auch für die Elementaranalyse eingesetzt wird, ist aus der US 3,985,505 bekannt. Unter anderem ist eine Analyseeinrichtung für die gleichzeitige Bestimmung von Kohlenstoff und Schwefel einer Probe angegeben, die einen Verbrennungsofen mit einer Verbrennungskammer, eine Pumpe zum Pumpen von Gasen, eine Erfassungseinrichtung für die Erfassung von SO₂-, CO- und CO₂-Gasen, ein Rohrleitungssystem, um die Teile der Anordnung miteinander unter anderem in einer Schleife zu verbinden, eine Sauerstoffversorgungseinrichtung sowie eine Spüleinrichtung aufweist.

Bei den vorstehend beschriebenen Vorrichtungen wird das Gasgemisch in einem Behälter gesammelt, so dass, entsprechend dem Volumen des Behälters, nur maximal diese Volumenmenge an gemischten Gasen für den weiteren Analysevorgang zur Verfügung steht. Entsteht bei der Probenverbrennung eine größere Gasmenge, geht ein entsprechender Anteil für den weiteren Analysevorgang verloren, so dass mit fehlerhaften Analyseergebnissen zu rechnen ist. Weiterhin besteht bei dem beschriebenen Ballasttank durch bewegte mechanische Teile und eine Vielzahl von Dichtungen ein hoher laufender Wartungsaufwand. Die Sammlung und Mischung der Verbrennungsgase vor der Detektion verhindert auch die Verfolgung des Verbrennungsverlaufs.

Ausgehend von dem vorstehend beschriebenen Stand der Technik liegt der vorliegenden Erfindung die Aufgabe zugrunde, eine Vorrichtung und ein entsprechendes Verfahren zu schaffen, mit denen, im Vergleich zum Stand der Technik, eine reproduzierbare Analyse der Elemente C und N, oder N einer Probe unabhängig von der Probenmenge und dem Verbrennungsverhalten im Continuous-Flow-Betrieb möglich ist.

Gelöst wird diese Aufgabe durch eine Vorrichtung mit den Merkmalen des unabhängigen Anspruchs 1 und verfahrensgemäß durch ein Verfahren mit den Merkmalen des unabhängigen Anspruchs 3.

Die erfindungsgemäße Vorrichtung zeichnet sich dadurch aus, dass die Teilereinrichtung die Gasmenge kontinuierlich aus den Verbrennungsgasen abzweigt. Sowohl die ins Freie führende Hauptgasmenge als auch die der Analysevorrichtung zugeführte Teilgasmenge werden über je einen Mass-Flow-Controller (MFC) mit einer relativen Genauigkeit der Teilereinrichtung von mindestens 1 % bei der N₂-Messung und von mindestens 0,1% bei der CO₂-Messung geregelt. Die der Teilereinrichtung zugeführte Gasmenge wird durch eine zwischen der Nachverbrennung und der Teilereinrichtung angeordnete CO₂-Adsorptions-Desorptions-Einrichtung auf ein Quasi-Zweistoffgemisch reduziert. Ein solches Quasi-Zweistoffgemisch ist als ein Gemisch aus Helium als ein Stoff und N₂, NOₓ und Restsauerstoff als zweiter Stoff für die Messung der Stickstoffkonzentration definiert. Oder es ist als ein Gemisch aus Helium als ein Stoff und CO₂ als zweiter Stoff für die Messung von CO₂ definiert. N₂, NOₓ und Restsauerstoff verhalten sich in Bezug auf die Gasteilung in ihren Eigenschaften quasi wie ein Stoff. Ein Zweistoffgemisch verhält sich bezüglich der Reproduzierbarkeit bei der Gasteilung wesentlich günstiger als ein Mehrstoffgemisch, z. B. N₂, NOₓ, O₂ und CO₂, und ist damit kalibrierbar.

Verfahrensgemäß wird zur Elementaranalyse zum Analysieren der Elemente C und N, oder N, einer Probe, zunächst die zu analysierende Probe unter Zufuhr von Helium und Sauerstoff verbrannt. Die Verbrennungsgase werden dann einer Nachverbrennung und einer Trocknung unterworfen. Der getrocknete Gasstrom wird anschließend einer Reduktion unterworfen und dann in einer Analysevorrichtung analysiert. Von der Gasmenge wird nach der Nachverbrennung und der Trocknung das CO₂ mit einer Adsorptions-Desorptionseinrichtung entfernt und danach wird gemäß der Erfindung ein Teil der Gasmenge kontinuierlich abgezweigt. Die abgezweigte Gasmenge wird dann kontinuierlich der Analysevorrichtung zugeführt; aufgrund des Zweistoff-Gasgemischs kann die Teilereinrichtung dabei mit einer geregelten Genauigkeit von mindestens 1 % bei der N₂-Messung und einer geregelten Genauigkeit von mindestens 0,1 % bei der CO₂-Messung, jeweils relativ in Bezug auf die gemessene Element-Konzentration, betrieben werden. Das Einhalten dieser Genauigkeitswerte ist dahingehend wesentlich, dass davon direkt die Genauigkeit der Analyseergebnisse abhängt.

Bei der erfindungsgemäßen Vorrichtung und dem erfindungsgemäßen Verfahren werden somit die Verbrennungsgase nicht gesammelt, um erst dann ein vorgegebenes Volumen abzuzweigen, sondern die Abtrennung der Verbrennungsgase erfolgt kontinuierlich.

Die erfindungsgemäße Vorrichtung und das erfindungsgemäße Verfahren zeichnen sich dadurch aus, dass die zu analysierende Probenmenge bzw. das Verbrennungsverhalten der Proben nicht durch das fest vorgegebene Volumen eines Sammelbehälters limitiert ist.

Vorzugsweise besitzt die Teilereinrichtung ein Volumen von 0,2 I bis 0,3 I bezogen auf eine Gesamtdurchflussmenge der Einrichtung von 1 bis 2 l/min. Es sollte sichergestellt sein, dass das Spülen nicht länger als 1 Minute benötigt, damit eine vertretbare (und möglichst kurze) Analysenzeit eingehalten wird. Aus diesem Grund wird ein Gesamtgasstrom von 1 bis 1,5 l/min erforderlich.

Damit zusätzlich zu Stickstoff auch Kohlenstoff analysierbar ist, wird verfahrensgemäß nach der Detektion des Stickstoffs das adsorbierte CO₂ desorbiert und detektiert, wobei auch das CO₂ die Teilereinrichtung durchströmt.

Neben der analytischen Bestimmung von CO₂ entfällt auch die Notwendigkeit, in der Betriebsart, bei der nur Stickstoff von Interesse ist, das CO₂ chemisch zu absorbieren.

Weitere Vorteile der erfindungsgemäßen Vorrichtung und des erfindungsgemäßen Verfahrens sind darin zu sehen, dass der reale Verbrennungsverlauf durch Beobachtung des N-Detektionssignals verfolgt und optimiert werden kann.

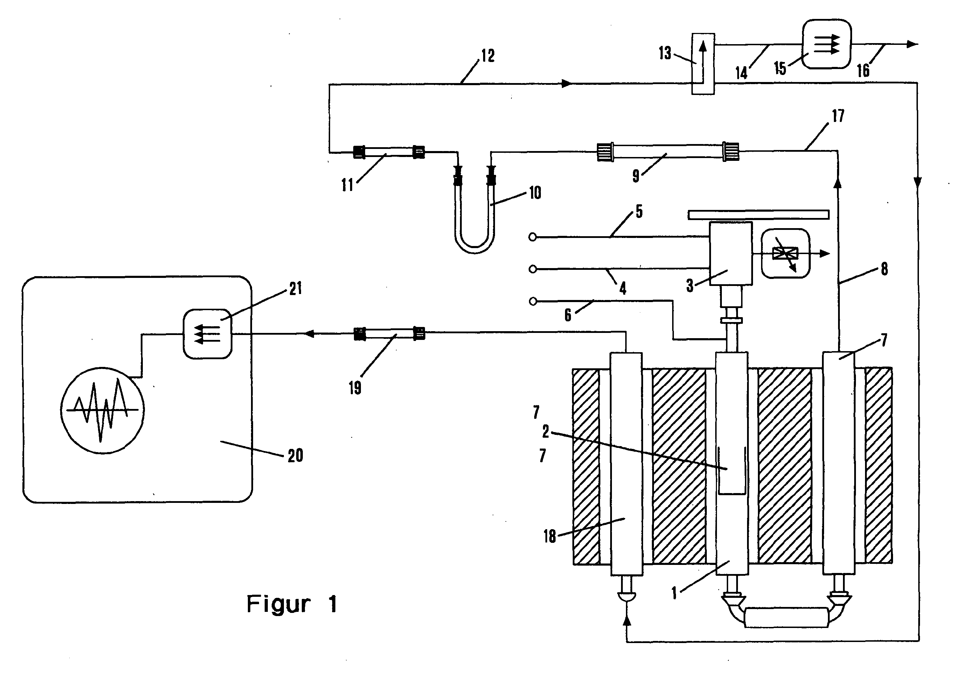

Weitere Einzelheiten und Merkmale der Erfindung ergeben sich aus der nachfolgenden Beschreibung eines Ausführungsbeispiels anhand der Zeichnung. In der Zeichnung zeigt die einzige Figur 1 einen schematischen Aufbau der Elementaranalysevorrichtung nach der Erfindung.

Die Vorrichtung umfasst ein senkrecht stehendes Verbrennungsrohr 1 mit einer Probenaufnahme 2 und einem Probengeber 3. Der Probengeber 3 umfasst einen Anschluss 4 für Trägergas, beispielsweise Helium, sowie einen Anschluss 5 für Spülgas, für das ebenfalls Helium verwendet werden kann. Unterhalb des Probengebers 3 ist ein weiterer Anschluss 6 für O₂ vorhanden.

An das untere Ende des Verbrennungsrohrs 1 schließt sich ein Nachverbrennungsrohr 7 an, dem die Verbrennungsgase der Nachverbrennung zugeführt werden. Der Gasstrom wird dann über eine Leitung 8 und eine nachfolgende Trocknungseinrichtung 9 einer U-förmigen CO₂-Adsorptions/Desorptions-Einrichtung 10 zugeführt.

An die CO₂-Adsorptions/Desorptions-Einrichtung 10 schließt sich ein weiteres Trocknungsrohr 11 an, über das dann die Verbrennungsgase, durch die Leitung 12, einer Teilereinrichtung 13 zugeführt werden, die im Wesentlichen aus einer Abzweigvorrichtung und einem Durchflussregler besteht. Von den Gasen, die der Teilereinrichtung 13 zugeführt werden, wird ein erster Teilstrom über die Leitung 14 und einen Durchflussregler 15 (Mass-Flow-Controller - MFC) und die Leitung 16 an die Umgebung abgegeben. Der Durchflussregler 15 mit der Verbindungsleitung 16 stellt somit einen Teil der Teilereinrichtung 13 dar.

Ein zweiter Teilstrom der Gase aus der Teilereinrichtung 13 wird über die Leitung 17 einem Reduktionsrohr 18 zugeführt, das beispielsweise mit Kupfergranulat gefüllt ist. An das Reduktionsrohr schließt sich dann eine weitere Trocknungseinrichtung 19 an, über die die Gase dann einer Analysevorrichtung 20, die eingangsseitig einen Durchflussregler 21 (Mass-Flow-Controller - MFC) umfasst, zugeführt werden.

Für die Analyse der Elemente Kohlenstoff und Stickstoff, oder nur Stickstoff, einer Probe wird die Probe über den Probengeber 3 in die Probenaufnahme 2 des Verbrennungsrohrs 1 eingefüllt. Bei der Probe kann es sich um eine feste oder flüssige Probe handeln, wozu entsprechend der Probengeber 3 angepasst werden muss.

Die Probe wird in dem Verbrennungsrohr 1 bei üblichen Verbrennungstemperaturen von bis zu 1150 °C unter Zufuhr von Sauerstoff (O₂) über die Leitung 6 und Trägergas (beispielsweise He) über den Anschluss 4 verbrannt. Die entstandenen Verbrennungsgase werden in dem Nachverbrennungsrohr 7 einer Nachverbrennung unterworfen und anschließend in der Trocknungseinrichtung 9 getrocknet, um Wasserdampf quantitativ zu entfernen, bevor die Gase dann der CO₂-Adsorptions/Desorptions-Einrichtung 10 zugeführt werden. In der CO₂-Adsorptions/DesorptionsEinrichtung 10, die beispielsweise mit Molekularsieb gefüllt ist, wird das CO₂ adsorbiert. Um noch vorhandene Spuren von Restfeuchte zu entfernen, ist das weitere Trocknungsrohr 11 vorgesehen, bevor die Verbrennungsgase der Teilereinrichtung 13 zugeführt werden.

In der Teilereinrichtung 13, die einen wesentlichen Bestandteil dieser Analysevorrichtung darstellt, wird kontinuierlich über die Leitung 17 ein Teil des Gases zur weiteren Analyse dem Reduktionsrohr 18 zugeführt, während ein zweiter Teilstrom über die Leitungen 14 und 16 ungenutzt, aber geregelt durch den Durchflussregler 15, abgeführt wird.

Die Teilereinrichtung 13 weist ein geringes Volumen von 0,2 I bis 0,3 I bezogen auf eine Gesamtdurchflussmenge der Vorrichtung, beispielsweise gemessen in der Leitung 12, von 1 bis 2 l/min auf. Diese Gesamtdurchflussmenge ist erforderlich, damit das Spülen der Vorrichtung, insbesondere auch der Teilereinrichtung 13, nicht länger als etwa 1 Minute erfordert.

Unter den vorstehend angegebenen Dimensionierungen der Teilereinrichtung 13 und der angegebenen Gesamtdurchflussmenge wird der Teilstrom an der Leitung 17, der zur weiteren Analyse benötigt wird, und der Teilstrom an der Leitung 14, der ungenutzt abgeführt wird, beispielsweise im Verhältnis 1:3 aufgeteilt, das bedeutet, die kontinuierliche Durchflussmenge des Teilstroms an der Leitung 17 beträgt 300 ml/min und die Durchflussmenge des Teilstroms an der Leitung 14 beträgt 900 ml/min.

In dem Reduktionsrohr 18, das beispielsweise mit dem Reduktionsmittel gefüllt ist, wird überschüssiger Sauerstoff absorbiert und Stickoxide werden zu N₂ reduziert. Um Restfeuchte zu entfernen, wird der Gasstrom, der noch Helium und N₂ bzw. CO₂ enthält, über das Trocknungsrohr 19 zu der Analysevorrichtung 20 geführt.

## Patentansprüche

1. Vorrichtung zur Elementaranalyse zum Analysieren der Elemente C und N, oder N, einer Probe, die ein Verbrennungsrohr (1), das mit einer Helium-Versorgung und einer Sauerstoff-Versorgung verbunden ist, ein sich daran anschließendes Nachverbrennungsrohr (7), eine nachfolgende Trocknungseinrichtung (9), eine sich daran anschließende Teilereinrichtung (13, 14, 15), durch die ein Teil der Gasmenge abgezweigt wird, aufweist, und mit einer Analysevorrichtung (20), der diese abgezweigte Gasmenge über ein Reduktionsrohr (18) zur Analyse von Verbrennungsgasen zugeführt wird, **dadurch gekennzeichnet, dass** die Teilereinrichtung (13, 14, 15) die Gasmenge kontinuierlich aus den Verbrennungsgasen abzweigt und die abgezweigte Gasmenge kontinuierlich zu der Analysevorrichtung (20) mit einer über einen Mass-Flow-Controller (MFC) (21) geregelten Genauigkeit der Teilereinrichtung (13, 14, 15) von mindestens 1 % bei der N₂-Messung und einer geregelten Genauigkeit der Teilereinrichtung (13, 14, 15) von mindestens 0,1 % bei der CO₂-Messung, jeweils relativ in Bezug auf die gemessene Element-Konzentration, führt und dass die der Teilereinrichtung (13, 14, 15) zugeführte Gasmenge durch eine vor der Teilereinrichtung (13, 14, 15) angeordnete CO₂-Adsorptions-Desorptions-Einrichtung (10) auf ein Quasi-Zweistoffgemisch reduziert wird, wobei ein solches Quasi-Zweistoffgemisch definiert ist als ein Gemisch aus Helium als ein Stoff und N₂, NOₓ und Restsauerstoff als zweiter Stoff oder als ein Gemisch aus Helium als ein Stoff und CO₂ als zweiter Stoff.

2. Vorrichtung nach Anspruch 1, **dadurch gekennzeichnet, dass** die Teilereinrichtung (13) ein Volumen von 0,2 I bis 0,3 I bezogen auf eine Gesamtdurchflussmenge der Einrichtung von 1 bis 2 l/min aufweist.

3. Verfahren zur Elementaranalyse zum Analysieren der Elemente C und N, oder N, einer Probe, bei dem die zu analysierende Probe unter Zufuhr von Helium und Sauerstoff verbrannt wird und die Verbrennungsgase einer Nachverbrennung und dann einer Trocknung unterworfen werden, wobei der getrocknete Gasstrom einer Reduktion unterworfen wird und dann in einer Analysevorrichtung analysiert wird, wobei von der Gasmenge nach der Nachverbrennung und der Trocknung ein Teil abgezweigt wird und diese abgezweigte Gasmenge der Analysevorrichtung zugeführt wird, **dadurch gekennzeichnet, dass** die abgezweigte Gasmenge kontinuierlich abgezweigt wird und diese abgezweigte Gasmenge kontinuierlich zu der Analysevorrichtung zugeführt wird, mit einer geregelten Genauigkeit der Teilereinrichtung von mindestens 1 % bei der N₂-Messung und einer geregelten Genauigkeit der Teilereinrichtung von mindestens 0,1 % bei der CO₂-Messung, jeweils relativ in Bezug auf die gemessene Element-Konzentration, und dass die der Teilereinrichtung (13, 14, 15) zugeführte Gasmenge über eine vorgeschaltete CO₂-Adsorption-Desorption auf ein Quasi-Zweistoffgemisch reduziert wird, wobei ein solches Quasi-Zweistoffgemisch definiert ist als ein Gemisch aus Helium als ein Stoff und N₂, NOₓ und Restsauerstoff als zweiter Stoff oder als ein Gemisch aus Helium als ein Stoff oder CO₂ als zweiter Stoff.

4. Verfahren nach Anspruch 3, **dadurch gekennzeichnet, dass** nach der Detektion des Stickstoffs das adsorbierte CO₂ desorbiert und detektiert wird und somit zusätzlich zu N auch C analysierbar ist.
